Europäisches Patentamt

European Patent Office

Office européen des brevets

(11) Numéro de publication : **0 367 675 B1**

## (12) FASCICULE DE BREVET EUROPEEN

(45) Date de publication du fascicule du brevet :
**31.03.93 Bulletin 93/13**

(51) Int. Cl.⁵ : **G01N 21/45**, G02B 6/12

(21) Numéro de dépôt : **89403018.8**

(22) Date de dépôt : **02.11.89**

(54) **Dispositif optique intégré pour la mesure d'indice de réfraction d'un fluide.**

(30) Priorité : **04.11.88 FR 8814433**

(43) Date de publication de la demande :
**09.05.90 Bulletin 90/19**

(45) Mention de la délivrance du brevet :
**31.03.93 Bulletin 93/13**

(84) Etats contractants désignés :
**CH DE GB IT LI NL SE**

(56) Documents cités :
**EP-A- 0 286 528**
**THE TRANSACTIONS OF ELECTRONICS, INFORMATION & COMMUNICATION ENGINEER, vol. E71, no. 4, avril 1988, pages 333-334, Tokyo, JP; M. DOI et al.: "Interferometric effect in a multilayer 3-Dimensional crossing optical waveguide circuit element"**

(56) Documents cités :
**SOVIET JOURNAL OF QUANTUM ELECTRONICS, vol. 6, no. 2, février 1976, pages 247-248, A.I.P., New York, US; E.M. ZOLOTOV: "Thin-film interferometer"**
**ELECTRONICS LETTERS, vol. 21, no. 6, 14 mars 1985, pages 245-246, Stevenage, Herts, GB; P.O. ANDERSSON et al.: "Fibre optic interferometer using integrated optics"**

(73) Titulaire : **COMMISSARIAT A L'ENERGIE ATOMIQUE**
**31/33, rue de la Fédération**
**F-75015 Paris (FR)**

(72) Inventeur : **Valette, Serge**
**41 rue des Eaux Claires**
**F-38100 Grenoble (FR)**
Inventeur : **Renard, Stéphane**
**"Le Château" Le Village**
**F-38560 Champ sur Drac (FR)**

(74) Mandataire : **Mongrédien, André et al**
**c/o BREVATOME 25, rue de Ponthieu**
**F-75008 Paris (FR)**

## Description

L'invention se rapporte à un dispositif du type interférométrique pour la mesure d'indices de réfraction de liquides ou de gaz, destiné à fonctionner dans des structures optiques intégrées.

L'invention trouve une application dans tous les domaines où l'on désire connaître l'indice de réfraction d'un fluide. En particulier, la mesure de l'indice de réfraction d'un gaz peut permettre de déterminer la nature de ce gaz et la concentration de ce gaz; ceci est particulièrement intéressant dans le cas d'un gaz dangereux ou toxique mélangé à d'autres gaz.

De même, la mesure de l'indice de réfraction d'un liquide peut permettre de déterminer la nature et la densité de ce liquide, ce qui permet de remonter à des paramètres comme le pH, la dilution ou la concentration; le pH et la dilution permettent en particulier la détermination de l'état de charge d'une batterie.

L'une des meilleures façons de mesurer un indice de réfraction d'un fluide est bien entendu l'utilisation d'une méthode optique.

Actuellement, les mesures d'un indice de réfraction d'un fluide sont basées sur les modifications des conditions de réflexion à l'interface entre le fluide d'indice inconnu et un milieu d'indice connu.

Cette méthode présente un certain nombre d'inconvénients. En particulier, le coefficient de réflexion entre deux milieux d'indice de réfraction varie relativement peu avec l'indice de réfraction de l'un des deux milieux, en particulier celui à mesurer, le second milieu étant supposé fixe. Cette méthode est donc peu précise, sauf dans deux cas particuliers d'utilisation énoncés ci-après.

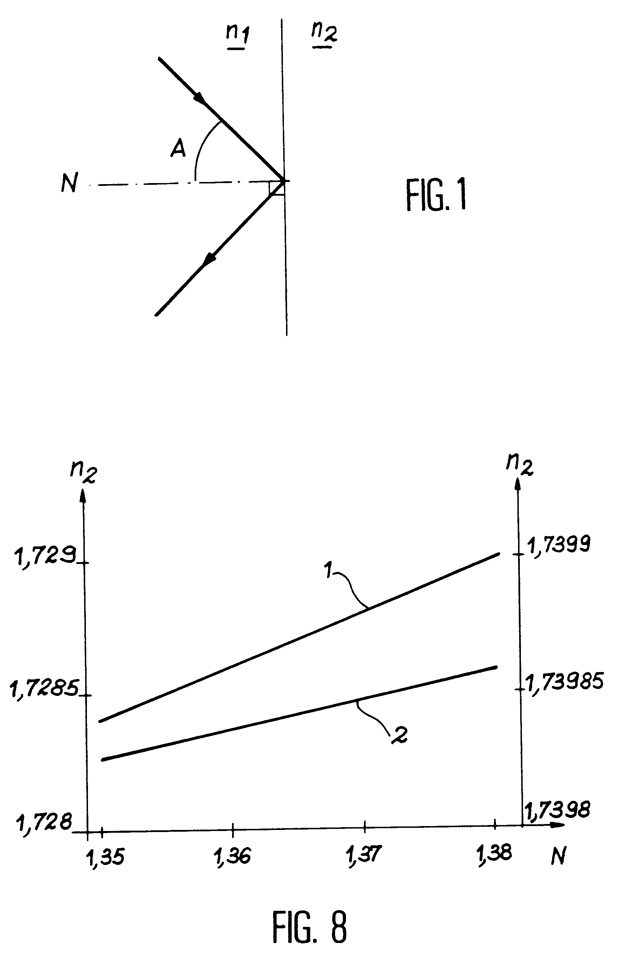

Soit deux milieux $n_1$ et $n_2$, comme représenté sur la figure 1 annexée, avec $n_2$ l'indice de réfraction à mesurer et $n_1$ l'indice de réfraction supposé fixe. Sur cette figure, A représente l'angle d'incidence, par rapport à la normale N à l'interface des deux milieux $n_1$-$n_2$, de la lumière.

Lorsque l'angle d'incidence A est élevé, particulièrement dans le cas où la lumière est polarisée dans le plan d'incidence, du fait de l'existence de l'angle de Brewster pour lequel le coefficient de réflexion $Rp$ correspondant au coefficient de réflexion selon une polarisation de la lumière parallèle au plan d'incidence est nul, la méthode ci-dessus est utilisable.

Cette méthode est aussi utilisable au voisinage de la réflexion totale si cette dernière a lieu, c'est-à-dire si $n_1$ est supérieur à $n_2$ et si A est supérieur à l'angle de réfraction total. Cet angle limite Al est égal à Arcsin($n_2/n_1$).

Dans ce second cas, la méthode ne peut donc marcher que si $n_1 > n_2$ et que si $n_2$ varie relativement peu étant donné que les variations du coefficient de réflexion ne sont importantes qu'au voisinage de l'angle limite. En effet, au voisinage de l'angle limite, la variation d'un indice de réfraction même faible induit une grande variation du coefficient de réflexion.

Cette méthode est donc très limitée et ne permet pas la mesure de n'importe quel type d'indice de réfraction, sur n'importe quelle plage de variation, et dans n'importe quelle condition d'éclairement.

Aussi, l'invention a pour objet un dispositif pour la mesure d'indice de réfraction d'un fluide, utilisable de façon beaucoup plus générale, dans n'importe quelle condition d'éclairement, et de plage de variation de cet indice.

Dans le cadre de l'invention, on entend par mesure de l'indice de réfraction d'un fluide, aussi bien la mesure de son indice de réfraction relatif que celle de son indice absolu.

L'indice de réfraction relatif d'un fluide correspond à la variation de l'indice de ce fluide par rapport à un indice de réfraction de référence. Cet indice de référence peut être l'indice de ce fluide dans un état connu ou l'indice d'un fluide quelconque dans un état connu.

La mesure de l'indice absolu du fluide est obtenue soit à partir de l'indice de réfraction relatif et de l'indice de référence soit directement (uniquement dans le cas d'une demi frange d'interférence).

Le principe du dispositif de l'invention est basé sur les variations de phase apportées par le changement d'indice de réfraction d'un milieu inconnu par rapport à un milieu connu, ces variations de phase étant mesurées par un système interférométrique.

Cette méthode de mesure peut être réalisée soit avec un circuit optique classique, soit avec un circuit optique intégré.

Pour des raisons de compacité, de dimensions du circuit, de compatibilité avec les fibres optiques et, finalement, de faible coût, l'optique intégrée est de très loin la technologie de réalisation la plus prometteuse pour un dispositif de mesure de l'indice de réfraction d'un fluide.

Aussi, l'invention a pour objet un dispositif optique intégré du type interféromètre permettant la mesure de l'indice de réfraction d'un milieu dans lequel peut être plongé le dispositif de mesure; ceci fait que ce dernier ne peut être utilisé que pour des gaz ou des liquides.

De façon plus précise, l'invention a pour objet un dispositif optique intégré servant à mesurer l'indice de réfraction d'un fluide comprenant (a) un guide de lumière correspondant à un indice effectif $n_1$ du mode guidé, formé sur un substrat et comportant une couche guidante destinée à véhiculer des faisceaux lumineux, intercalée entre une couche inférieure et une couche supérieure ayant des indices de réfraction inférieurs à celui de la couche guidante, (b) une zone de mesure d'interaction du guide de lumière destinée à être au contact du fluide, la couche supérieure au niveau de la zone de mesure présentant une épaisseur inférieure à la distance de pénétration de l'onde évanescente du faisceau lumineux guidé et en dehors de cette zone d'interaction une épaisseur supérieure à ladite distance de pénétration de cette même onde évanescente, et (c) un interféromètre formé au moins en partie dans le guide de lumière et comportant un circuit optique de référence et un circuit optique de mesure incluant la zone de mesure, pour mesurer le déphasage introduit par un changement d'indice effectif $n_2$ du mode guidé dû au fluide.

Ce dispositif utilise le fait que, en optique intégrée, l'indice effectif d'un mode guidé dépend de tous les paramètres de la structure du guide et en particulier de l'épaisseur et des indices de réfraction des différentes couches constituant ce guide. Aussi, la modification de l'un de ces paramètres, et en particulier de l'indice de réfraction de l'une de ces couches, modifie l'indice effectif du mode guidé considéré et introduit donc localement une modification de phase de la lumière qui peut être détectée par interférométrie.

Il est préférable que la zone de mesure ou d'interaction du guide avec le fluide dont on désire connaître l'indice de réfraction ait une structure telle que la lumière guidée continue d'être guidée. En outre, elle doit être protégée de toute influence des milieux autres que le milieu inconnu sur la zone d'interaction.

Dans le dispositif de l'invention, l'utilisation d'une couche supérieure au niveau de la zone d'interaction de mesure ayant une épaisseur inférieure à la distance de pénétration de l'onde évanescente associée au mode guidé fait que ce dernier "voit" le milieu d'indice à mesurer; dans la mesure où cet indice à mesurer reste inférieur à l'indice effectif de la lumière guidée dans cette zone d'interaction de mesure, la lumière reste guidée dans toute la structure. Cette condition constitue un mode de fonctionnement avantageux du dispositif. A l'inverse, dans les zones où l'épaisseur de la couche supérieure est supérieure à la distance de pénétration de ce même mode guidé, ce mode guidé ne voit pas le milieu extérieur d'indice à mesurer.

Lorsque le milieu extérieur d'indice inconnu est corrosif, ce qui est le cas dans les électrolytes de batterie, pour lequel le dispositif de l'invention permet une mesure de l'état de charge, il est nécessaire que la zone de mesure d'interaction comporte comme couche supérieure un matériau qui ne soit pas attaqué par le milieu extérieur dont on veut connaître l'indice de réfraction. Aussi, si le matériau de la couche supérieure risque d'être attaqué, on utilise une couche protectrice supplémentaire disposée sur la couche supérieure du guide, dont l'épaisseur, au niveau de la zone de mesure, est telle que la somme des épaisseurs de la couche supérieure et de la couche protectrice additionnelle, au niveau de la zone d'interaction, soit inférieure à la distance de pénétration de l'onde évanescente du mode guidé lorsque la couche protectrice a un indice de réfraction inférieur à l'indice effectif du mode guidé.

Lorsque l'indice de réfraction de la couche protectrice est supérieur ou égal à l'indice effectif du mode guidé, l'onde guidée voit toujours le milieu extérieur dans la zone d'interaction. Cependant, il est avantageux dans ce dernier cas d'avoir une couche protectrice d'épaisseur h″ telle que le guide de lumière reste bien monomode.

Seule la zone d'interaction doit être protégée du milieu extérieur à mesurer lorsqu'un système de protection équipé de joints d'étanchéité est prévu pour isoler la zone de mesure du reste du circuit et, en particulier, des circuits de mesure et de référence.

Le dispositif de l'invention peut être réalisé en technologie silicium ou en technologie III-V (GaAs ou InP), technologies bien maîtrisées en électronique intégrée.

De préférence, on utilise une technologie silicium. Dans ce cas, la couche guidante est réalisée en nitrure de silicium ou en silice dopée au phosphore ou au titane et les couches inférieures et supérieures du guide optique réalisées par exemple en silice pure ou en verre. La silice ou les verres ont des indices de réfraction variant de l'ordre de 1,45 à 1,9 pour une longueur d'onde de 800 nm alors que la silice dopée au phosphore a un indice compris entre 1,45 et 1,5 en fonction du pourcentage de phosphore introduit, pour une longueur d'onde de 800 nm. Le nitrure de silicium a quant à lui un indice de réfraction élevé voisin de 2 pour une longueur d'onde de 800 nm.

Dans le cas d'un acide comme l'acide sulfurique, le matériau de protection résistant à cet acide est, en particulier, l'alumine, d'indice de réfraction de 1,61 environ (toujours pour 800 nm), ou le nitrure de silicium. Dans ce dernier cas, la couche supérieure du guide de lumière peut présenter dans la zone de mesure d'interaction une épaisseur nulle.

Selon un premier mode de réalisation, le dispositif interférométrique permettant la mesure du déphasage introduit par le milieu d'indice de réfraction à mesurer comporte :

- une source de lumière émettant un faisceau principal de lumière,
- des moyens de collimation du faisceau principal,
- des premiers moyens séparateurs pour séparer le faisceau principal collimaté en un faisceau de mesure et en un faisceau principal de référence, et pour diriger le faisceau de mesure sur la zone de mesure,
- un premier miroir pour renvoyer le faisceau de mesure provenant de la zone de mesure sur les premiers moyens séparateurs,
- des moyens déphaseurs pour introduire au moins un déphasage constant sur une partie du faisceau principal de référence afin de former au moins deux faisceaux secondaires de référence déphasés,
- un second miroir pour renvoyer les deux faisceaux secondaires de référence sur les premiers moyens séparateurs afin de les faire respectivement interférer avec le faisceau de mesure et former ainsi au moins deux premiers signaux lumineux distincts d'interférence, ces premiers signaux d'interférence étant représentatifs de l'indice de réfraction du fluide au contact de la zone de mesure,

- des seconds moyens séparateurs pour séparer les deux premiers signaux d'interférence, et
- au moins deux détecteurs pour détecter chacun un premier signal d'interférence,

les moyens de collimation, les premiers et seconds moyens séparateurs et les moyens déphaseurs étant formés respectivement par une modification locale appropriée de l'indice effectif du guide de lumière, et les miroirs étant formés par une gravure locale et au moins partielle du guide de lumière.

Selon un second mode de réalisation, le dispositif interférométrique permettant la mesure du déphasage introduit par le milieu d'indice de réfraction à mesurer comporte :

- une source de lumière émettant un faisceau incident principal de lumière,
- des moyens de collimation du faisceau principal,
- des premiers moyens séparateurs pour séparer le faisceau principal collimaté en un faisceau de mesure et en un faisceau principal de référence, et pour diriger le faisceau de mesure sur la zone de mesure,
- un premier miroir pour envoyer le faisceau de mesure provenant de la zone de mesure sur des seconds moyens séparateurs,
- des moyens déphaseurs pour introduire au moins un déphasage constant sur une partie du faisceau principal de référence afin de former au moins deux faisceaux secondaires de référence déphasés,
- un second miroir pour envoyer les deux faisceaux secondaires de référence sur les seconds moyens séparateurs afin de les faire respectivement interférer avec le faisceau de mesure et former ainsi au moins deux premiers signaux lumineux distincts d'interférence, ces premiers signaux d'interférence étant représentatifs de l'indice de réfraction du fluide au contact de la zone de mesure,
- des troisièmes moyens séparateurs pour séparer les deux premiers signaux d'interférence, et
- au moins deux détecteurs pour détecter chacun un premier signal d'interférence,

les moyens de collimation, les premiers, seconds et troisièmes moyens séparateurs et les moyens déphaseurs étant formés respectivement par une modification locale appropriée de l'indice effectif du guide de lumière, et les miroirs étant formés par une gravure locale et au moins partielle du guide de lumière.

Lorsque les moyens déphaseurs du second mode de réalisation sont situés entre les premiers moyens séparateurs et le second miroir, ce dernier reçoit effectivement les deux faisceaux secondaires de référence et envoie directement ces deux faisceaux secondaires de référence sur les seconds moyens séparateurs. Lorsque, ces moyens déphaseurs sont situés entre le second miroir et les seconds moyens séparateurs, ce second miroir reçoit en réalité, le faisceau principal de référence qu'il envoie directement sur les moyens déphaseurs ; ce faisceau principal est alors séparé en deux faisceaux secondaires de référence par les moyens déphaseurs qui assurent alors l'envoi direct de ces deux faisceaux secondaires de référence sur les seconds moyens séparateurs.

Afin de récupérer toute l'énergie lumineuse sortant des premiers moyens séparateurs, et donc la totalité des signaux d'interférence, formée sur ces premiers moyens pour le premier mode de réalisation du dispositif interférométrique et formée sur les seconds moyens séparateurs pour le second mode de réalisation du dispositif interférométrique, des moyens supplémentaires séparateurs associés à des seconds détecteurs sont prévus pour séparer et détecter des seconds signaux d'interférence, formés simultanément aux premiers signaux d'interférence.

L'utilisation d'au moins deux systèmes d'interférence permet d'obtenir le déphasage introduit par les variations d'indice du fluide inconnu avec un maximum de sensibilité et d'éviter toute ambiguïté sur la valeur de l'indice à mesurer lorsque ce dernier augmente puis rediminue entraînant un changement de signe sur le déphasage qui est indétectable si ce déphasage est proche de k $\pi$. L'existence d'un changement de phase au voisinage de k $\pi$ ne peut exister à la fois sur les deux systèmes d'interférence puisque ceux-ci sont déphasés d'une valeur différente de $\pi$. En particulier, le déphasage introduit est de préférence égal à $\pi/2$.

En général, la lumière fournie par la source est véhiculée par une fibre optique d'entrée afin d'améliorer le couplage entre la source de lumière et le reste du dispositif optique intégré. Cette fibre d'entrée est généralement monomode et, dans certains cas, à maintien de polarisation; ceci est nécessaire dans le cas d'un guide optique formé sur un substrat en silicium de structure $SiO_2/Si_3N_4/SiO_2$.

Avec un guide d'onde de structure différente et en particulier du type $Si/SiO_2/SiO_2$ dopée/$SiO_2$, la fibre d'entrée peut être multimode. Dans ces conditions, une optique de collimation en sortie de la fibre multimode doit être prévue pour assurer l'injection de la lumière dans le guide d'onde.

Les détecteurs des signaux d'interférence, comme la source, sont situés hors du guide de lumière. Aussi, des fibres de sortie peuvent être prévues entre le guide optique et les détecteurs, ces fibres pouvant être des fibres multimodes ou monomodes.

D'autres caractéristiques et avantages de l'invention ressortiront mieux de la description qui va suivre, donnée à titre illustratif et non limitatif, en référence aux figures 2 à 8, la figure 1 ayant déjà été décrite.

- la figure 2 représente schématiquement, en perspective, un premier mode de réalisation du dispositif optique conforme à l'invention,
- la figure 3 illustre, en coupe, un premier mode de réalisation de la zone d'interaction de mesure du dispositif de la figure 2,
- la figure 4 représente, en coupe, un second mode de réalisation de la zone de mesure d'interaction du dispositif de la figure 2,
- la figure 5 illustre, en coupe, le couplage de la fibre optique d'entrée avec le guide d'onde du dispositif de la figure 2,
- la figure 6 représente schématiquement, vue de dessus, une variante de réalisation du dispositif conforme à l'invention représentée figure 2,
- la figure 7 représente, schématiquement vu de dessus, un second mode de réalisation du dispositif optique conforme à l'invention, et
- la figure 8 représente des courbes donnant les variations $dn_2$ de l'indice effectif du guide de lumière dans la zone d'interaction en fonction de l'indice absolu de réfraction à déterminer, N.

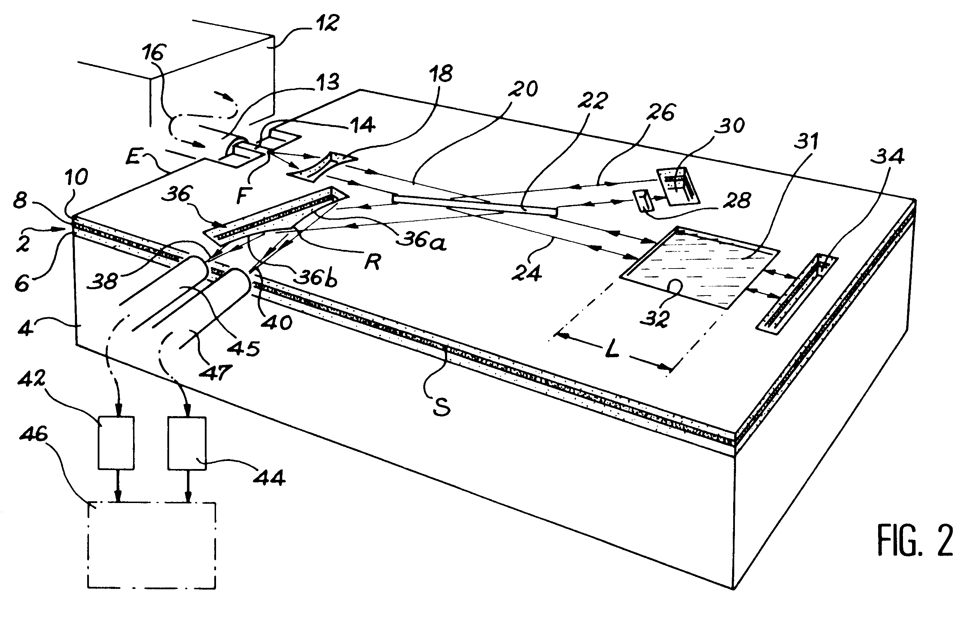

Le dispositif intégré selon l'invention comprend, comme représenté sur la figure 2, un guide de lumière 2 réalisé de façon avantageuse sur un substrat monocristallin 4 en silicium.

Le guide optique 2 est constitué de trois couches superposées, respectivement 6, 8, 10 en partant du substrat 4, la couche 8 constituant la couche guidante du guide optique. Cette couche 8 présente un indice de réfraction supérieur à celui des couches 6 et 10. En particulier, les couches 6 et 10 sont réalisées en silice pure et la couche 8 en nitrure de silicium.

L'épaisseur de la couche guidante 8 est comprise entre 10 et 250 nm environ pour que le guide 2 soit monomode. Les épaisseurs de silice des couches 6 et 10 dépendent de celle de la couche de nitrure ; elles sont comprises entre 1 et 5 μm pour assurer un bon isolement de la lumière respectivement du substrat absorbant 4 pour la couche 6 et du milieu extérieur pour la couche 10.

La couche de silice 6 peut être obtenue par oxydation thermique du substrat suivie d'un dépôt chimique en phase vapeur (CVD), ce qui permet d'obtenir des qualités optiques meilleures que si cette couche 6 avait été obtenue par dépôt direct CVD sur le substrat. La couche de nitrure 8 est obtenue par dépôt chimique en phase vapeur basse pression ou assistée plasma (LPCVD ou PECVD).

La couche supérieure 10 du guide 2 est obtenue par PECVD.

La majeure partie des composants optiques du dispositif selon l'invention est définie dans ce guide de lumière.

Le dispositif optique de la figure 2 comporte, à l'extérieur du guide 2, une source de lumière 12 telle qu'un laser. Une fibre d'entrée de préférence monomode 13 collecte la lumière issue de la source et assure son injection dans la couche guidante 8 par l'intermédiaire d'un microguide 14.

Le faisceau lumineux 16 véhiculé par la fibre 13 puis le microguide 14 est reçu par une lentille intégrée de collimation 18 qui permet de transformer la lumière issue du microguide 14, assimilée à un point lumineux, en un faisceau de lumière parallèle 20. Pour ce faire, l'extrémité du microguide 14 en regard de la lentille 18 doit être située au foyer F de cette lentille.

Le faisceau de lumière collimaté 20 attaque alors une lame séparatrice 22 constituée ici par un simple sillon gravé dans la couche supérieure 10 du guide optique. Cette lame 22 permet la formation d'un faisceau de mesure 24 et d'un faisceau de référence 26, obtenus respectivement par transmission et réflexion du faisceau incident sur la lame 22.

Un déphaseur 28 placé sur le faisceau de référence 26 permet de partager ce dernier en deux faisceaux de référence déphasés de π/2 ou de (2k+1)π/2.

Une zone d'interaction 32, destinée à être placée au contact du fluide 31 dont on désire mesurer l'indice de réfraction, est formée dans le guide 2 et est traversée par le faisceau de mesure 24.

Un miroir plan 30 permet de renvoyer les deux faisceaux de référence déphasés sur la lame séparatrice 22. De même, un miroir plan 34 permet de renvoyer le faisceau de mesure 24, via la zone d'interaction 32, sur la lame séparatrice 22 de façon à ce que le faisceau de mesure 24 et les deux faisceaux de référence interfèrent et forment deux signaux lumineux d'interférence représentatifs de l'indice de réfraction du fluide 31 situé au contact de la zone d'interaction 32.

Dans l'exemple représenté, les miroirs 30 et 34 sont disposés perpendiculairement aux faisceaux de référence 26 et de mesure 24 ; les faisceaux réfléchis par ces deux miroirs sont donc confondus avec les faisceaux incidents correspondants.

Les deux systèmes d'interférence formés sur la lame séparatrice 22 sont déphasés de π/2 ou de (2k+1)π/2. Ils sont reçus par un miroir séparateur 36, comportant une phase d'entrée formée de deux parties 36a et 36b paraboliques dont les tangentes au point de rencontre R forment entre elles un angle compris entre 120 et 180°, donnant naissance à deux signaux distincts d'interférence 38 et 40 détectés respectivement par deux photodétecteurs 42 et 44 qui peuvent être accolés au guide de lumière 2 ou bien, comme représenté sur la figure 2, disposés hors du guide et connectés au guide à l'aide de respectivement deux fibres optiques de sortie 45 et 47 de préférence multimodes.

Si a représente l'amplitude des deux signaux de référence et b l'amplitude du signal de mesure, les deux détecteurs 42 et 44 reçoivent un signal lumineux respectivement d'intensité $I_1$ et $I_2$ égal à :

$$I_1 = a^2 + b^2 + 2abcos (P + P_0)$$
$$I_2 = a^2 + b^2 + 2abcos (P + P_0 - P_d)$$

avec $P_0 = 2 \pi n_1(L_2 - L_1)/\lambda - 2 \pi n_1 L/\lambda$
et $P = 2 \pi n_2 L/\lambda$

Dans ces équations, $P_0$ est le déphasage constant introduit entre le faisceau de mesure et chaque faisceau de référence et est indépendant de l'indice absolu N du fluide 31 inconnu ; $n_1$ représente l'indice effectif du guide de lumière en dehors de la zone d'interaction 32 ; $L_2$ et $L_1$ les chemins parcourus par la lumière selon le faisceau de mesure et les faisceaux de référence; L est la longueur de la zone d'interaction 32 ; $\lambda$ est la longueur d'onde de la lumière guidée ; P est le déphasage inconnu qui dépend de N (indice de réfraction absolu à connaître) via l'indice effectif $n_2$ du mode guidé de lumière dans la zone d'interaction 32, et Pd le déphasage constant introduit par le déphaseur 28.

L'utilisation de deux systèmes d'interférence permet lorsque le déphasage $P+P_0$ est multiple de $k\pi$ pour l'un des deux systèmes de ne pas l'être pour l'autre système d'interférence.

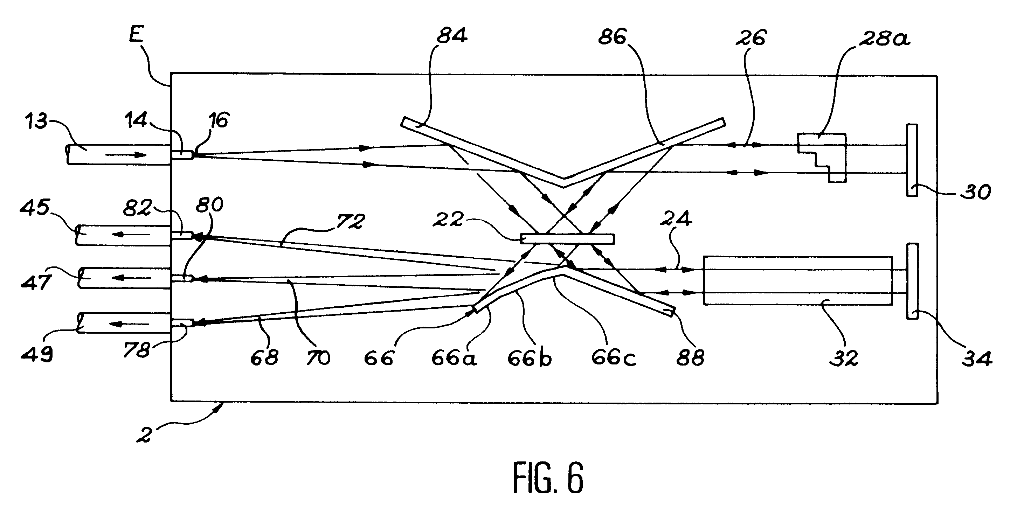

Lorsque l'indice N varie d'une valeur dN (indice relatif), l'indice effectif du guide de lumière dans la zone d'interaction 32 varie de $dn_2$ et par conséquent le déphasage P varie de $dP = 2x\pi dn_2 L/\lambda$ , x étant le nombre de passages du faisceau de mesure dans la zone de mesure (x=2 dans les figures 2 et 6)

La longueur L est choisie en fonction de la valeur $dn_2$ maximum possible ($dn_2$max) de deux façons :

a) telle que dP voisin de $\pi/2$, ce qui donne L voisin de $\pi/4$x$dn_2$max. Dans ce cas, les intensités $I_1$ et $I_2$ varient entre $(a + b)^2$ et $(a - b)^2$ tout en restant dans la même frange d'interférence.

b) Lorsque L est choisi grand devant $\lambda/2$x$dn_2$max, on observe un défilement des franges d'interférence du fait que dP peut être très supérieur à $2\pi$. On doit alors effectuer un comptage des franges d'interférences qui défilent. Si pour une raison quelconque les mesures ne peuvent plus être faites (arrêt momentané du dispositif), il peut y avoir perte de l'information antérieure car on ne sait jamais de combien de franges entières le système d'interférence a pu se déplacer durant la période d'arrêt ; ceci est dû au fait qu'un déphasage optique n'est défini qu'à 2k $\pi$ près (ce qui conduit à des solutions multiples pour dN et N) et que sa valeur n'est jamais connue dans l'absolu mais par comparaison avec une situation antérieure. Aussi est-il préférable de choisir un déphasage dP voisin de $\pi/2$ pour déterminer L.

A partir de la mesure des intensités $I_1$ et $I_2$ et pour le cas b), en comptant en outre le nombre de franges d'interférence des deux systèmes on obtient $dn_2$. A partir de $dn_2$, on peut déterminer dN soit par un étalonnage préalable du dispositif, soit par les équations de propagation. Un étalonnage préalable du dispositif est la méthode préférée du fait de sa simplicité et de son faible taux d'erreur. La valeur de l'indice absolu peut être obtenue soit directement (uniquement dans le cas d'une demi-frange, lorsque les extrêmes des indices du milieu 31 sont connues), soit à partir de l'indice relatif dN et de l'indice de référence.

A l'aide d'un dispositif de traitement électronique 46 approprié, connecté aux deux photodétecteurs 42 et 44, il est possible d'apprécier une fraction de frange d'interférence. Ce dispositif permet de déterminer $dn_2$ et donc dN et N. De plus dans le cas b), ce dispositif assure le comptage des franges. Ce système électronique 46 est en particulier celui dans l'article "Liquid Level Interferometer" de S.S. JACOBS et J.G. SMALL, applied Optics, vol. 20, N° 20, pp. 3508-3513, d'Octobre 1981.

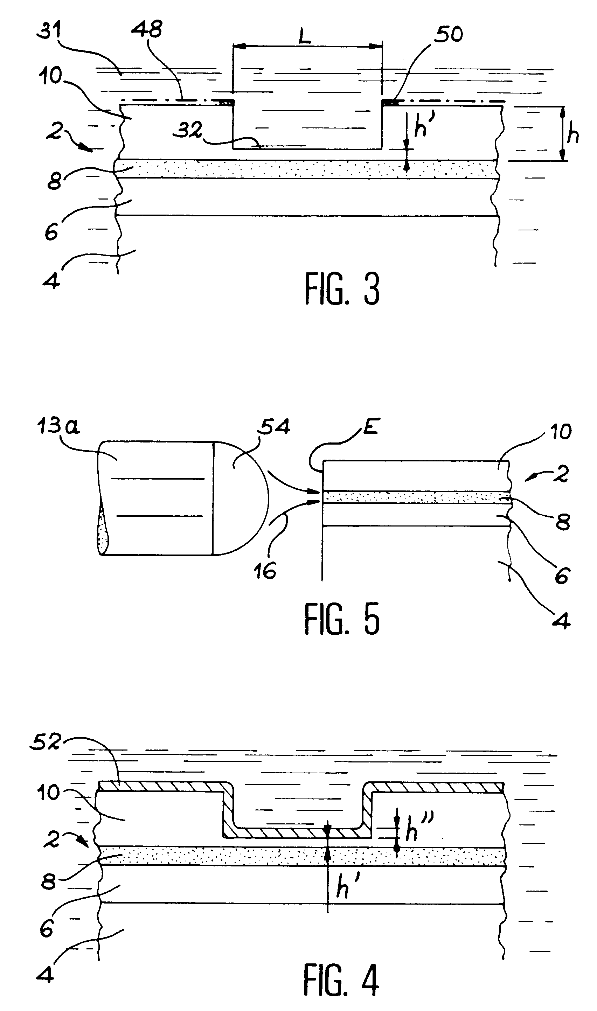

Sur la figure 3, on a représenté un mode de réalisation de la zone d'interaction 32 avec le liquide 31 d'indice inconnu, conforme à l'invention. Dans la zone 32, l'épaisseur h' de la couche supérieure 10 en silice doit être plus petite que la distance de pénétration de l'onde évanescente associée au mode guidé. h' peut être nul. En outre, l'indice de réfraction inconnu N doit rester inférieur à l'indice effectif du mode guidé pour que l'onde lumineuse reste guidée.

En dehors de la zone 32 d'interaction, l'épaisseur h de la couche 10 de silice doit être plus grande que la distance de pénétration de l'onde évanescente associée au mode guidé. En particulier, pour une longueur d'onde de 800 nm guidée, h doit être supérieur à environ 1 µm pour une couche guidante 8 en $Si_3N_4$ d'environ 160 nm d'épaisseur.

Conformément à l'invention, seule la zone d'interaction 32 a besoin d'être placée au contact du fluide 31 inconnu. Aussi, afin d'éviter la détérioration du capteur, il est possible de protéger ce dernier, en dehors de la zone 32, par un film protecteur 48 par exemple en téflon ou en un autre matériau résistant au fluide à mesurer dans le cas d'un électrolyte dont on veut mesurer l'indice de réfraction ; des joints d'étanchéité 50 sont prévus tout autour de la zone 32 afin d'empêcher que le milieu corrosif 31 ne vienne au contact des autres zones du circuit optique.

Il est aussi possible, comme représenté sur la figure 4, de recouvrir l'ensemble du dispositif d'une couche protectrice 52 d'épaisseur h'' telle que par exemple h'' + h' soit inférieur à la distance de pénétration de l'onde évanescente du mode guidé. L'alumine est un bon matériau de protection dans le cas d'un liquide acide.

Avec un guide d'onde utilisant une structure $Si/SiO_2/SiO_2$ dopée/$SiO_2$, la fibre d'entrée 13a, comme représenté sur la figure 5, peut être multimode. Dans ce cas, une lentille de collimation 54 en bout de la fibre optique 13a doit être prévue pour assurer l'injection de la lumière dans la couche guidante 8 du guide d'onde 2, via éventuellement un microguide.

Le dispositif optique selon l'invention représenté sur la figure 2, peut être modifié comme représenté sur la figure 6. Les composants de ce dispositif, identiques à ceux de la figure 2, portent les mêmes références.

Dans cette variante, le déphaseur $28_a$ situé sur le faisceau de référence 26 est un déphaseur à trois voies, ce qui permet en particulier de s'affranchir des fluctuations dans l'intensité de la source lumineuse 12. Les déphasages Pd utilisés entre les trois voies sont avantageusement 0, $(2k+1)\,\pi/2$ et $(2k+1)\,\pi$. Pour k=0, l'utilisation d'un déphaseur trois voies permet d'obtenir trois systèmes de franges d'interférence d'intensité $I_1$, $I_2$, $I_3$ satisfaisant aux équations suivantes :

$$I_1 = a^2 + b^2 + 2ab\cos(P' - P'_0)$$
$$I_2 = a^2 + b^2 \pm 2ab\sin(P' - P'_0)$$
$$I_3 = a^2 + b^2 - 2ab\cos(P' - P'_0)$$

où P' est le déphasage variable dû au fluide 31 inconnu et $P'_0$ est un déphasage constant qui dépend de la forme du capteur et qui est déterminé par étalonnage du capteur.

Dans ces conditions, la variation du déphasage dP' introduit par le fluide 31 d'indice inconnu satisfait à l'équation $dP' = d(\text{Arctg}\,(B))$ où B est égal à $(2I_2 - I_1 - I_3)/(I_1 - I_3)=\pm\,tg(P'-P'_0)$ avec $P'-P'_0=\pm\,\text{Arctg}\,B$.

L'utilisation d'un déphaseur trois voies nécessite alors l'utilisation en sortie du dispositif optique d'un miroir séparateur 66 triple voie comportant trois parties 66a, 66b et 66c de forme parabolique séparant les trois signaux d'interférence 68, 70, 72 formés sur la lame 22. Les faisceaux d'interférence séparés sont alors envoyés via des microguides de sortie 78, 80, 82 dans trois fibres de sortie multimodes connectées à trois photodétecteurs de façon similaire à celle des faisceaux d'interférence (figure 2).

Il est possible de remplacer la lentille de collimation d'entrée 18 (figure 2) par un miroir parabolique 84 qui est un moyen de collimation. En outre, on peut introduire dans le dispositif de mesure de l'invention des miroirs plans 86 et 88 pour former des bras de référence 26 et de mesure 24 parallèles entre eux. Les fibres optiques d'entrée 13 et de sortie 45, 47 et 49 sont alors couplées au guide de lumière 2 par la même face E et non sur deux faces perpendiculaires E et S (figure 2) ; le miroir 84 renvoie le faisceau incident 16 vers la lame séparatrice 22, le miroir 86 renvoie le faisceau de référence, formé sur la lame séparatrice 22, vers le déphaseur 28a et le miroir 88 renvoie le faisceau de mesure, formé sur la lame séparatrice 22, vers la zone de mesure 32.

Si nécessaire, les miroirs plans 86 et 88 peuvent être utilisés dans un système à deux signaux d'interférence utilisant comme optique d'entrée de collimation une lentille (figure 2).

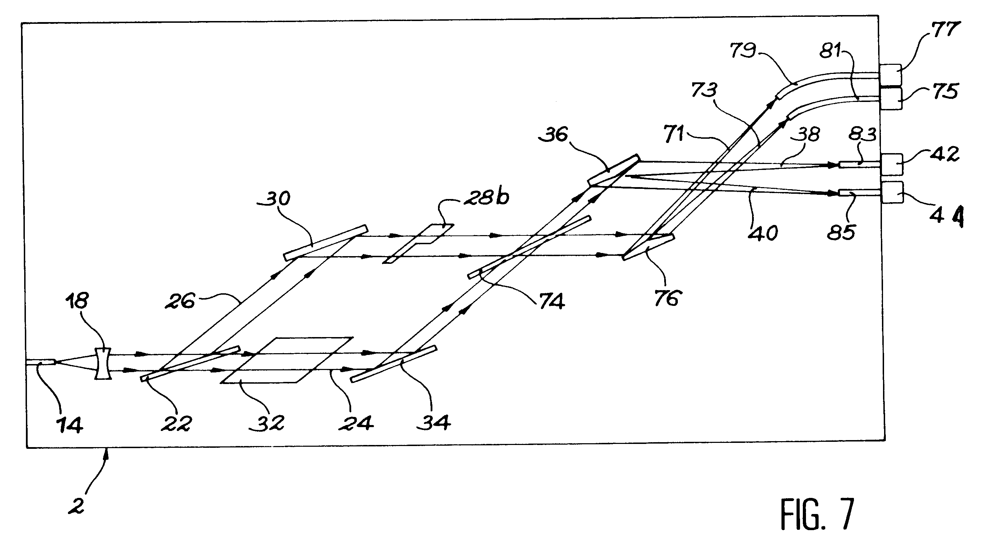

Dans les systèmes interférométriques représentés sur les figures 2 et 6, les miroirs 30 et 34 sont respectivement perpendiculaires aux faisceaux de référence 26 et de mesure 24, et ils renvoient donc nécessairement ces faisceaux sur la lame séparatrice 22. Conformément à l'invention, les faisceaux de mesure 24 et de référence 26 sortant de la lame séparatrice 22 peuvent attaquer respectivement les miroirs 34 et 30 selon une incidence oblique, comme représenté sur la figure 7. Les composants optiques de l'interféromètre de la figure 7, identiques à ceux de la figure 2, portent les mêmes références.

Dans ce mode de réalisation, les faisceaux lumineux réfléchis par les miroirs 30 et 34 sont alors reçus par une autre lame séparatrice 74, formée par un sillon gravé dans le guide de lumière 2, sur laquelle se forment les systèmes d'interférence.

Ces systèmes d'interférence, dans le cas d'un déphaseur 28b à deux voies, sont au nombre de quatre. La détection de deux de ces signaux, par exemple les signaux 38 et 40 issus du miroir séparateur 36 suffit à la détermination de l'indice N du fluide au contact de la zone de mesure 32. Toutefois, il peut être intéressant, dans certains cas, de détecter les deux autres systèmes d'interférence.

A cet effet, un miroir séparateur supplémentaire 76, placé en aval de la lame séparatrice 74 doit être prévu pour donner naissance à deux autres signaux distincts d'interférence 71 et 73 détectés respectivement par deux photodétecteurs 75 et 77 qui peuvent être accolés au guide 2, comme les détecteurs 42 et 44 ou bien disposés hors du guide 2 et connectés à ce dernier via des fibres optiques de sortie (figure 2).

Le miroir séparateur 76 est identique en tout point au miroir séparateur 36.

Des microguides de sortie 79, 81, 83, 85 peuvent être prévus pour améliorer la focalisation des signaux d' interférence sur les détecteurs 75, 77, 42, 44.

Le déphaseur 28b, responsable des deux faisceaux secondaires de référence et donnant naissance aux quatre signaux d'interférence 38, 40, 71 et 73 peut être placé entre le miroir 30 et la lame séparatrice, comme représenté sur la figure 7 ou bien être placé en amont du miroir 30, c'est-à-dire entre la lame séparatrice 22 et le miroir 30.

L'agencement des miroirs 30 et 34 de la figure 7 et l'utilisation conjointe d'une seconde lame séparatrice 74, d'un second miroir séparateur 76 et de deux détecteurs supplémentaires 75 et 77 peuvent bien entendu être combinés au mode de réalisation de la figure 6 utilisant l'ensemble de miroirs 84-86-88.

Pour un déphasage constant de $\pi/2$ introduit par le déphaseur deux voies 28b, on obtient les quatre systèmes d'interférence d'intensité $I_1$, $I_2$, $I_3$ et $I_4$ satisfaisant aux équations suivantes :

$$I_1 = a^2 + b^2 + 2ab\cos (P + P_0)$$
$$I_2 = a^2 + b^2 + 2ab\cos (P + P_0 + \pi/2)$$
$$I_3 = a^2 + b^2 - 2ab\cos (P + P_0)$$
$$I_4 = a^2 + b^2 - 2ab\cos (P + P_0 + \pi/2)$$

P et $P_0$ ayant les mêmes significations que précédemment (figure 2).

Conformément à l'invention, les miroirs 84, 86, 88, 30, 34, 36, 66, 76, la lentille 18, les lames séparatrices 22, 74, les déphaseurs 28, 28a ou 28b sont définis dans le guide 2 afin de modifier localement la valeur de l'indice effectif du mode guidé.

La lentille peut être réalisée, comme schématisé sur la figure 2, par simple gravure anisotrope de toute la couche 10, les dimensions et la forme définissant respectivement les dimensions et les propriétés optiques de cette lentille.

Il est possible de réaliser les lames séparatrices 22 et 74 par une gravure anisotrope partielle du guide de lumière ou bien sous forme d'un réseau fonctionnant en régime de Bragg et les déphaseurs 28, 28a et 28b en gravant partiellement le guide de lumière de façon anisotrope.

En particulier, dans le cas d'un guide de lumière en $SiO_2/Si_3N_4/SiO_2$, les lames séparatrices 22 et 74 ainsi que les déphaseurs 28, 28a ou 28b sont réalisés par gravure anisotrope totale de la couche 10.

Les miroirs 30, 34, 36, 66, 76, 84 et 86 peuvent être réalisés, comme schématisé sur la figure 2, par une gravure complète du guide optique 2, jusqu'au substrat 4, une gravure anisotrope du guide permet l'obtention de flancs gravés parfaitement abrupts. Afin d'améliorer leurs caractéristiques de réflexion, il est possible de recouvrir les flancs gravés d'une couche d'or ou d'aluminium.

Pour de plus amples détails sur la fabrication des différents composants intégrés du capteur de l'invention, on peut se référer à la demande de brevet français 87 04877, déposée au nom du Demandeur.

On donne ci-après deux exemples de détermination de l'indice de réfraction N d'un liquide inconnu (électrolyte par exemple), en référence à la figure 8 qui donne les variations de l'indice effectif du guide dans la zone 32 en fonction des variations de l'indice N.

La courbe 1 correspond à un capteur formé dans une structure $Si/SiO_2/Si_3N_4/Al_2O_3$, les couches de $SiO_2$, $Si_3N_4$ et $Al_2O_3$ ayant un indice de réfraction respectivement de 1,453, 1,996 et 1,61 et une épaisseur respectivement de 2 $\mu$m, 165 nm et 150 nm.

La courbe 2 correspond à un capteur formé dans une structure ne se différenciant de la précédente que par l'épaisseur de la couche d'alumine qui vaut 400 nm au lieu de 150 nm.

On voit donc clairement que l'indice effectif $n_2$ de la zone d'interaction 32 varie avec l'indice N de l'électrolyte (qui varie ici de 1,35 à 1,38). Les valeurs $n_2$ pour les courbes 1 et 2 se lisent respectivement sur les axes des ordonnées à gauche et à droite de la figure.

Le déphasage lumineux P varie donc aussi avec l'indice N de la valeur dP. On a :

$$dP = x \cdot \frac{2\pi}{\lambda} (n_2(N) - n_2(N_0)) L$$

avec $\lambda$ la longueur d'onde optique utilisée ; L la longueur d'interaction de la structure avec l'électrolyte; $n_2$ (N) l'indice effectif du mode guidé pour une valeur N de l'indice de réfraction de l'électrolyte; $n_2(N_0)$ l'indice effectif du mode guidé pour une valeur $N_0$ de l'indice de réfraction de l'électrolyte (par exemple $N_0$ = 1,35).

Le facteur x dans cette équation correspond au nombre de passages de la lumière dans la zone d'interaction 32 (x=1 sur la figure 7 et x=2 sur les figures 2 et 6).

En général pour assurer une bonne linéarité de la mesure de P on choisit le déphasage maximal noté $dP_{max}$ tel que :

$$dP_{max} = x \cdot \frac{2\pi}{\lambda} dn_{2max} \text{ L est voisin de } \frac{\pi}{2},$$

ce qui donne comme valeur de L :

L$\simeq\lambda/4.xdn_2$max.

Dans notre exemple :

$dn_2$max = $n_2$(1,38) - $n_2$(1,35).

On voit que suivant les structures utilisées pour la zone d'interaction 32 (courbe 1 ou 2) $dn_2$max peut être très différent : $dn_2$max$\simeq 5.10^{-4}$ pour la structure correspondant à la courbe 1 et $dn_2$max = $2,5.10^{-5}$ pour la structure correspondant à la courbe 2.

On choisit donc pour la structure de la courbe 1 : L$\simeq$200 $\mu$m , pour la structure de la courbe 2 : L$\simeq$4 $\mu$m avec $\lambda$ = 0,8 $\mu$m et x=2.

Ceci permet de moyenner plus ou moins fortement les valeurs de l'indice N à mesurer sur une longueur d'interaction plus ou moins grande.

## Revendications

1. Dispositif optique intégré servant à mesurer l'indice de réfraction d'un fluide comprenant (a) un guide de lumière (2) correspondant à un indice effectif $n_1$ du mode guidé, formé sur un substrat (4) et comportant une couche guidante (8) destinée à véhiculer des faisceaux lumineux (16, 24, 26, 38, 40), intercalée entre une couche inférieure (6) et une couche supérieure (10) ayant des indices de réfraction inférieurs à celui de la couche guidante (8), (b) une zone de mesure d'interaction (32) du guide de lumière destinée à être au contact du fluide (31), la couche supérieure (10) au niveau de la zone de mesure présentant une épaisseur (h') inférieure à la distance de pénétration de l'onde évanescente du faisceau lumineux guidé et en dehors de cette zone d'interaction une épaisseur (h) supérieure à ladite distance de pénétration de cette même onde évanescente, et (c) un interféromètre formé au moins en partie dans le guide de lumière et comportant un circuit optique de référence (22, 28, 28a, 30) et un circuit optique de mesure (22, 32, 34) incluant la zone de mesure (32), pour mesurer le déphasage introduit par un changement d'indice effectif $n_2$ du mode guidé dû au fluide.

2. Dispositif optique selon la revendication 1, caractérisé en ce que la couche supérieure (10) du guide est revêtue d'une couche protectrice (52) dont l'épaisseur (h″) au niveau de la zone de mesure (32) est telle que la somme des épaisseurs (h′ + h″) de la couche supérieure (10) et de la couche protectrice (52) au niveau de la zone d'intéraction (32) est inférieure à la distance de pénétration de l'onde évanescente lorsque la couche protectrice a un indice de réfraction inférieur à l'indice effectif du mode guidé.

3. Dispositif optique selon la revendication 1 ou 2, caractérisé en ce qu'un système de protection (48) équipé de joints d'étanchéité (50) est prévu pour isoler la zone de mesure (32) des circuits optiques de mesure et de référence.

4. Dispositif optique selon l'une quelconque des revendications 1 à 3, caractérisé en ce que la couche guidante (8) est en nitrure de silicium ou en silice dopée et les couches inférieure (6) et supérieure (10) en silice pure.

5. Dispositif optique selon l'une quelconque des revendications 2 à 4, caractérisé en ce que la couche protectrice (52) est en alumine.

6. Dispositif optique selon l'une quelconque des revendications 1 à 5, caractérisé en ce que les composants optiques du système interférométrique sont tous formés par modification locale du guide de lumière.

7. Dispositif optique selon l'une quelconque des revendications 1 à 6, caractérisé en ce qu'il comprend :
   - une source de lumière (12) émettant un faisceau incident principal (16) de lumière,
   - des moyens de collimation (18, 84) du faisceau principal,
   - des premiers moyens séparateurs (22) pour séparer le faisceau principal collimaté en un faisceau de mesure (24) et en un faisceau principal de référence (26), et pour diriger le faisceau de mesure (24) sur la zone de mesure (32),
   - un premier miroir (34) pour renvoyer le faisceau de mesure (24) provenant de la zone de mesure sur les premiers moyens séparateurs (22),
   - des moyens déphaseurs (28, 28a, 28b) pour introduire au moins un déphasage constant sur une partie du faisceau principal de référence (26) afin de former au moins deux faisceaux secondaires de référence déphasés,
   - un second miroir (30) pour renvoyer les deux faisceaux secondaires de référence sur les premiers moyens séparateurs (22) afin de les faire respectivement interférer avec le faisceau de mesure et former ainsi au moins deux premiers signaux lumineux distincts d'interférence (38, 40; 68, 70, 72), ces premiers signaux d'interférence étant représentatifs de l'indice de réfraction du fluide (31) au contact de la zone de mesure,
   - des seconds moyens séparateurs (36, 66) pour séparer les deux premiers signaux d'interférence, et
   - au moins deux premiers détecteurs (42, 44) pour détecter chacun un premier signal d'interférence,

   les moyens de collimation (18, 84), les premiers et seconds moyens séparateurs (22, 36, 66) et les moyens déphaseurs étant formés respectivement par une modification locale appropriée de l'indice effectif du mode guidé, et les miroirs (30, 34) étant formés par une gravure locale et au moins partielle du guide de lumière.

8. Dispositif optique selon l'une quelconque des revendications 1 à 6, caractérisé en ce qu'il comprend :
   - une source de lumière (12) émettant un faisceau incident principal (16) de lumière,
   - des moyens de collimation (18, 84) du faisceau principal,
   - des premiers moyens séparateurs (22) pour séparer le faisceau principal collimaté en un faisceau de mesure (24) et en un faisceau principal de référence (26), et pour diriger le faisceau de mesure (24) sur la zone de mesure (32),
   - un premier miroir (34) pour envoyer le faisceau de mesure (24) provenant de la zone de mesure sur des seconds moyens séparateurs (74),
   - des moyens déphaseurs (28, 28a, 28b) pour introduire au moins un déphasage constant sur une partie du faisceau principal de référence (26) afin de former au moins deux faisceaux secondaires de référence déphasés,
   - un second miroir (30) pour envoyer les deux faisceaux secondaires de référence sur les seconds moyens séparateurs (74) afin de les faire respectivement interférer avec le faisceau de mesure et former ainsi au moins deux premiers signaux lumineux distincts d'interférence (38, 40; 68, 70, 72), ces premiers signaux d'interférence étant représentatifs de l'indice de réfraction du fluide (31) au contact de la zone de mesure,
- des troisièmes moyens séparateurs (36, 66) pour séparer les deux premiers signaux d'interférence, et
- au moins deux détecteurs (42, 44) pour détecter chacun un premier signal d'interférence,

les moyens de collimation (18, 84), les premiers, seconds et troisièmes moyens séparateurs (22, 36, 66, 74) et les moyens déphaseurs étant formés respectivement par une modification locale appropriée de l'indice effectif du mode guidé, et les miroirs (30, 34) étant formés par une gravure locale et au moins partielle du guide de lumière.

9. Dispositif optique selon la revendication 7 ou 8, caractérisé en ce qu'une fibre optique d'entrée (13, 13a), éventuellement associée à un micro-guide d'entrée (14) formé sur le substrat (4), est intercalée entre la source (12) de lumière et les moyens (18, 84) de collimation, afin de diriger le faisceau principal sur les moyens de collimation.

10. Dispositif optique selon l'une quelconque des revendications 7 à 9, caractérisé en ce que des moyens supplémentaires séparateurs (76) associés à des seconds détecteurs (75, 77) sont prévus pour séparer et détecter des seconds signaux d'interférence (71, 73) représentatifs de l'indice de réfraction du fluide (31).

11. Dispositif optique selon l'une quelconque des revendications 7 à 10, caractérisé en ce que des fibres optiques (45, 47, 49) de sortie, éventuellement associées à des micro-guides (78, 80, 82, 79, 81, 83, 85) de sortie formés sur le substrat, sont prévues en amont des premiers et/ou seconds détecteurs (42, 44, 75, 77) afin de diriger les signaux d'interférence sur les détecteurs.

12. Dispositif optique selon l'une quelconque des revendications 7 à 11, caractérisé en ce qu'un troisième miroir de renvoi (86) est intercalé entre les premiers moyens séparateurs (22) et les moyens déphaseurs (28a) et en ce que ce miroir est formé par une gravure locale et au moins partielle du guide de lumière (2).

13. Dispositif optique selon l'une quelconque des revendications 7 à 12, caractérisé en ce qu'un quatrième miroir (88) de renvoi est intercalé entre les premiers moyens séparateurs (22) et la zone de mesure (32) et est formé par une gravure locale et au moins partielle du guide de lumière.

14. Dispositif selon l'une quelconque des revendications 7 à 13, caractérisé en ce que les moyens déphaseurs (28a) sont constitués de trois déphaseurs formant ainsi trois faisceaux secondaires de référence interférant avec le faisceau de mesure pour former trois premiers signaux d'interférence (68, 70, 72).

15. Dispositif optique selon la revendication 13, caractérisé en ce que les premier, second, troisième, et quatrième miroirs sont formés par un flanc gravé du guide de lumière, s'étendant jusqu'au substrat (4).

16. Dispositif optique selon la revendication 10, caractérisé en ce que les premiers (22), seconds (36, 66) et troisièmes (74) moyens séparateurs et/ou les moyens séparateurs supplémentaires (76) sont formés par un flanc gravé du guide de lumière, s'étendant jusqu'au substrat (44).

17. Dispositif optique selon l'une quelconque des revendications 1 à 16, caractérisé en ce que la zone de mesure (32) a une longueur L égale à environ $\lambda/4x.dn_2max$ avec $\lambda$ la longueur d'onde du mode guidé, $dn_2max$ les variations maximales possibles de l'indice effectif du mode guide dans la zone de mesure et x le nombre de passages du faisceau de mesure (24) dans la zone de mesure.

## Patentansprüche

1. Integrierte optische Vorrichtung, die zum Messen des Brechungsindex eines Fluids dient und umfaßt: (a) einen Lichtleiter (2), der einem effektiven Brechungsindex $n_1$ für die geleitete Mode entspricht und auf einem Substrat (4) geformt ist und eine leitende Schicht (8) aufweist, die dazu bestimmt ist, Lichtstrahlen (16, 24,26, 38, 40) zu leiten und zwischen einer unteren Schicht (6) und einer oberen Schicht (10) angeordnet ist, die Brechungsindizes kleiner als der der leitenden Schicht (8) aufweisen, (b) einen Wechselwirkungsmeßbereich (32) des Lichtleiters, der dazu bestimmt ist, mit dem Fluid in Kontakt (31) zu sein, wobei die obere Schicht (10) auf der Höhe des Meßbereichs eine geringere Dicke (h') als die Eindringtiefe der abklingenden Welle des geleiteten Lichtstrahls und außerhalb dieses Wechselwirkungsbereichs eine Dicke (h) größer als die Eindringtiefe dieser selben abklingenden Welle aufweist, und (c) ein Interferometer, das wenigstens teilweise in dem Lichtleiter geformt ist und einen optischen Referenzkreis (22, 28, 28a, 30) und einen optischen Meßkreis (32) aufweist, um die durch eine durch das Fluid verursachte Änderung des effektiven Index $n_2$ der geleiteten Mode erzeugte Phasenverschiebung zu messen.

2. Optische Vorrichtung nach Anspruch 1, dadurch gekennzeichnet, daß die obere Schicht (10) des Leiters mit einer Schutzschicht (52) verkleidet ist, deren Dicke (h″) auf der Höhe des Meßbereichs (32) derart ist, daß die Summe der Dicken (h′ + h″) der oberen Schicht (10) und der Schutzschicht (52) auf der Höhe des Wechselwirkungsbereichs (32) kleiner ist als die Eindringtiefe der abklingenden Welle, wenn die Schutzschicht einen Brechungsindex kleiner als der effektive Index der geleiteten Mode besitzt.

3. Optische Vorrichtung nach Anspruch 1 oder 2, dadurch gekennzeichnet, daß ein Schutzsystem (48), das mit Dichtungsverbindungen (50) ausgerüstet ist, vorgesehen ist, um den Meßbereich (32) der optischen Meß- und Referenzkreise zu isolieren.

4. Optische Vorrichtung nach einem der Ansprüche 1 bis 3, dadurch gekennzeichnet, daß die Leiterschicht (8) aus Siliziumnitrid oder aus dotiertem Silizium besteht und daß die untere (6) und die obere (10) Schicht aus reinem Silizium bestehen.

5. Optische Vorrichtung nach einem der Ansprüche 2 bis 4, dadurch gekennzeichnet, daß die Schutzschicht (52) aus Aluminiumoxyd besteht.

6. Optische Vorrichtung nach einem der Ansprüche 1 bis 5, dadurch gekennzeichnet, daß die optischen Bestandteile des interferometrischen Systems alle durch eine lokale Modifikation des Lichtleiters geformt sind.

7. Optische Vorrichtung nach einem der Ansprüche 1 bis 6, dadurch gekennzeichnet, daß es umfaßt:
   - eine Lichtquelle (12), die einen einfallenden Hauptlichtstrahl (16) aussendet,
   - Bündelungsvorrichtungen (18, 84) für den Hauptstrahl,
   - erste Trennvorrichtungen (22), um den gebündelten Hauptstrahl in einen Meßstrahl (24) und einen Hauptreferenzstrahl (26) zu trennen und um den Meßstrahl (24) auf den Meßbereich (32) zu richten,
   - einen ersten Spiegel (34), um den von dem Meßbereich (24) kommenden Meßstrahl auf die ersten Trennvorrichtungen (22) zu richten,
   - Phasenverschiebungsvorrichtungen (28, 28a, 28b), um wenigstens eine konstante Phasenverschiebung bei einem Teil des Hauptreferenzstrahls (26) einzuführen, um wenigsten zwei sekundäre, phasenverschobene Referenzstrahlen zu bilden,
   - einen zweiten Spiegel (30), um die beiden sekundären Referenzstrahlen auf die ersten Trennvorrichtungen (22) zu richten, um sie jeweils mit dem Meßstrahl interferieren zu lassen und so wenigstens zwei erste verschiedene Interferenz-Lichtsignale (38, 40; 68, 70, 72) zu erzeugen, wobei diese ersten Interferenzsignale den Brechungsindex des Fluids (31) im Kontakt mit dem Meßbereich angeben,
   - zweite Trennvorrichtungen (36, 66) zum Trennen der beiden ersten Interferenzsignale, und
   - wenigstens zwei erste Detektoren (42, 44), damit jeder ein erstes Interferenzsignal detektiert, wobei die Bündelungsvorrichtungen (18, 84), die ersten und zweiten Trennvorrichtungen (22, 36, 66) und die phasenverschiebungsvorrichtungen jeweils durch eine geeignete lokale Modifikation des effektiven Index für die geleitete Mode geformt sind und die Spiegel (30, 34) durch eine lokale und wenigsten teilweise Ätzung des Lichtleiters geformt sind.

8. Optische Vorrichtung nach einem der Ansprüche 1 bis 6, dadurch gekennzeichnet, daß es umfaßt:
   - eine Lichtquelle (12), die einen einfallenden Hauptlichtstrahl (16) aussendet,
   - Bündelungsvorrichtungen (18, 84) für den Hauptstrahl,
   - erste Trennvorrichtungen (22), um den gebündelten Hauptstrahl in einen Meßstrahl (24) und einen Hauptreferenzstrahl (26) zu trennen und um den Meßstrahl (24) auf den Meßbereich (32) zu richten,
   - einen ersten Spiegel (34), um den von dem Meßbereich (24) kommenden Meßstrahl auf zweite Trennvorrichtungen (74) zu richten,
   - Phasenverschiebungsvorrichtungen (28, 28a, 28b), um wenigstens eine konstante Phasenverschiebung bei einem Teil des Hauptreferenzstrahls (26) einzuführen, um wenigsten zwei sekundäre, phasenverschobene Referenzstrahlen zu bilden,
   - einen zweiten Spiegel (30), um die beiden sekundären Referenzstrahlen auf die zweiten Trennvorrichtungen (74) zu richten, um sie jeweils mit dem Meßstrahl interferieren zu lassen und so wenigstens zwei erste verschiedene Interferenz-Lichtsignale (38, 40; 68, 70, 72) zu erzeugen, wobei diese ersten Interferenzsignale den Brechungsindex des Fluids (31) im Kontakt mit dem Meßbereich angeben,
   - dritte Trennvorrichtungen (36, 66) zum Trennen der beiden ersten Interferenzsignale, und
   - wenigstens zwei erste Detektoren (42, 44), damit jeder ein erstes Interferenzsignal detektiert, wobei die Bündelungsvorrichtungen (18, 84), die ersten, zweiten und dritten Trennvorrichtungen (22, 36, 66, 74) und die Phasenverschiebungsvorrichtungen jeweils durch eine geeignete lokale Modifikation des effektiven Index für die geleitete Mode geformt sind und die Spiegel (30, 34) durch eine lokale und wenigsten teilweise Ätzung des Lichtleiters geformt sind.

9. Optische Vorrichtung nach Anspruch 7 oder 8, dadurch gekennzeichnet, daß eine optische Eingangsfaser (13, 13a), die eventuell mit einem auf dem Substrat (4) gebildeten Mikro-Eingangsleiter (14) verbunden ist, zwischen der Lichtquelle (12) und den Bündelungsvorrichtungen (18, 84) angeordnet ist, um den Hauptlichtstrahl auf die Bündelungsvorrichtung zu richten.

10. Optische Vorrichtung nach einem der Ansprüche 7 bis 9, dadurch gekennzeichnet, daß zusätzliche Trennvorrichtungen (76), die mit zweiten Detektoren (75, 77) verbunden sind, vorgesehen sind, um zweite Interferenzsignale (71, 73), welche den Brechungsindex des Fluids (31) angeben, zu trennen und zu detektieren.

11. Optische Vorrichtung nach einem der Ansprüche 7 bis 10, dadurch gekennzeichnet, daß optische Ausgangsfasern (45, 57, 59), die eventuell mit auf dem Substrat gebildeten Mikro-Eingangsleitern (78, 80, 82, 79, 81, 83, 85) verbunden sind, oberhalb der ersten und/oder zweiten Detektoren (42, 44, 75, 77) vorgesehen sind, um die Interferenzsignale auf die Detektoren zu richten.

12. Optische Vorrichtung nach einem der Ansprüche 7 bis 11, dadurch gekennzeichnet, daß ein dritter Umlenkspiegel (86) zwischen den ersten Trennvorrichtungen (22) und den Phasenverschiebungsvorrichtungen (28a) vorgesehen ist und daß dieser Spiegel durch eine lokale und wenigstens teilweise Ätzung des Lichtleiters (2) geformt ist.

13. Optische Vorrichtung nach einem der Ansprüche 7 bis 12, dadurch gekennzeichnet, daß ein vierter Umlenkspiegel (88) zwischen den ersten Trennvorrichtungen (22) und dem Meßbereich (32) vorgesehen ist und durch eine lokale und wenigstens teilweise Ätzung des Lichtleiters geformt ist.

14. Optische Vorrichtung nach einem der Ansprüche 7 bis 13, dadurch gekennzeichnet, daß die Phasenverschiebungsvorrichtungen (28a) aus drei Phasenverschiebern bestehen, die somit drei sekundäre Referenzstrahlen bilden, die mit dem Meßstrahl interferieren, um drei erste Interferenzsignale (68, 70, 72) zu bilden.

15. Optische Vorrichtung nach Anspruch 13, dadurch gekennzeichnet, daß der erste, zweite, dritte und vierte Spiegel durch eine geätzte Flanke, die sich bis zum Substrat (4) erstreckt, des Lichtleiters gebildet sind.

16. Optische Vorrichtung nach Anspruch 10, dadurch gekennzeichnet, daß die ersten (22), zweiten (36, 66) und dritten (74) Trennvorrichtungen und/oder die zusätzlichen Trennvorrichtungen (76) durch eine geätzte Flanke, die sich bis zum Substrat (44) erstreckt, des Lichtleiters gebildet sind.

17. Optische Vorrichtung nach einem der Ansprüche 1 bis 17, dadurch gekennzeichnet, daß der Meßbereich (32) eine Länge L ungefähr gleich $\lambda/4x.dn_2max$ besitzt, mit $\lambda$ gleich der Wellenlänge der geleiteten Mode, $dn_2max$ gleich den maximal möglichen Änderungen des effektiven Indes der in dem Meßbereich geleiteten Mode und x der Anzahl der Durchgänge des Meßstrahls (24) in dem Meßbereich.

## Claims

1. Integrated optical device for measuring the refractive index of a fluid comprising (a) a light guide (2) corresponding to an effective index $n_1$ of the guided mode, formed on a substrate (4) and having a guiding layer (8) for carrying light beams (16,24,26,38,40), inserted between a lower layer (6) and an upper layer (10) having refractive indices below that of the guiding layer (8), (b) an interaction measuring zone (32) of the light guide to be in contact with the fluid (31), the upper layer level (10) with the measuring zone having a thickness (h') smaller than the penetration distance of the evanescent wave of the guided light be and outside said interaction zone a thickness (h) greater than the penetration distance of said same evanescent wave, and (c) an interferometric system, at least partly formed in the light guide and having a reference optical circuit (22,28,28a,30) and a measuring optical circuit (22,32,34) including the measuring zone (32), in order to measure the phase shift introduced by a change to the effective index $n_2$ of the guided mode due to the fluid.

2. Optical device according to claim 1, characterized in that the upper layer (10) of the guide is coated with a protective layer (52) whose thickness (h") at the measurement zone (32) is such that the sum of the thicknesses (h' + h") of the upper layer (10) and the protective layer (52) at the interaction zone (32) is less than the penetration distance of the evanescent wave when the protective layer has a refractive index below the effective index of the guided mode.

3. Optical device according to claims 1 or 2, characterized in that a protection system (48) equipped with seals (50) insulates the measurement zone (32) from the measurement and reference optical circuits.

4. Optical device according to any one of the claims 1 to 3, characterized in that the guiding layer (8) is of silicon nitride or doped silica and the lower (6) and upper (10) layers of pure silica.

5. Optical device according to any one of the claims 2 to 4, characterized in that the protective layer (52) is of alumina.

6. Optical device according to any one of the claims 1 to 5, characterized in that the optical components of the interferometric system are all formed by local modification of the light guide.

7. Optical device according to any one of the claims 1 to 6, characterized in that it comprises:
a light source (12) emitting a main incident light beam (16), means (18,84) for collimating the main beam,
first splitting means (22) for splitting the collimated main beam into a measured beam (24) and a main reference beam (26) and for directing the measurement beam (24) onto the measurement zone (32),
a first mirror (34) for reflecting the measurement beam (24) from the measurement zone onto the first splitting means (22), phase shifting means (28,28a,28b) for introducing at least one constant phase shift on part of the main reference beam (26), in order to form at least two secondary phase shifted reference beams,
a second mirror (30) for reflecting the two secondary reference beams onto the first splitting means (22), in order to make them respectively interfere with the measuring beam and thus form at least two first separate interference light signals (38;40;68,70,72), said first interference signals representing the refractive index of the fluid (31) in contact with the measuement zone,
second splitting means (36,66) for splitting the first two interference signals and
at least two detectors (42,44) for in each case detecting a first interference signal,
the collimation means (18,84), the first and second splitting means (22,36,66) and the phase shifting means being respectively formed by an appropriate local modification of the effective index of the light beam, and the mirrors (30,34) being formed by a local and at least partial etching of the light guide.

8. Optical device according to any one of the claims 1 to 6, characterized in that it comprises:
a light source (12) emitting a main incident light beam (16), means (18,84) for collimating the main beam,
first splitting means (22) for splitting the main collimated beam into a measurement beam (24) and a main reference beam (26) and for directing the measurement beam (24) onto the measurement zone (32), a first mirror (34) for reflecting the measurement beam (24) from the measurement zone onto second splitting means (74),
phase shifting means (28,28a,28b) for introducing at least one constant phase shift onto part of the main reference beam (26), in order to form at least two secondary phase shifted reference beams, a second mirror (30) for reflecting the two secondary reference beams onto the second splitting means (74), so as to respectively make them interfere with the measurement beam and thus form at least two first separate interference light signals (38;40;68,70,72), said first interference signals representing the refractive index of the fluid (31) in contact with the measurement zone,
third aplitting means (36,66) for splitting the first two interference signals and
at least two detectors (42,44) for in each case detecting a first interference signal,
the collimating means (18,84), the first, second and third splitting means (22,36,66,74) and the phase shifting means being respectively formed by an appropriate local modification of the effective index of the light guide, and the mirrors (30,34) being formed by a local and at least partial etching of the light guide.

9. Optical device according to claims 7 or 8, characterized in that an optical input fibre (13,13a), optionally associated with an input microguide (14) formed on substrate (4) is placed between the light source (12) and the collimating means (18,84), in order to direct the main beam onto the collimating means.

10. Optical device according to any one of the claims 7 to 9, characterized in that supplementary splitting means (76) associated with second detectors (75,77) are provided for splitting and detecting second interference signals (71,73) representative of the refractive index of fluid (31).

11. Optical device according to any one of the claims 7 to 10, characterized in that optical output fibres (45,47,49), optionally associated with output microguides (78,80,82,79,81, 83,85) formed on the substrate are provided upstream of the first and/or second detectors (42,44,75,77), in order to direct the interference signals onto the detectors.

12. Optical device according to any one of the claims 7 to 11, characterized in that a third reflecting mirror (86) is placed between the first splitting means (22) and the phase shifting means (28a) and in that said mirror is formed by local and at least partial etching of light guide (2).

13. Optical device according to any one of the claims 7 to 12, characterized in that a fourth reflecting mirror (88) is placed between the first splitting means (22) and the measurement zone (32) and is formed by a local and at least partial etching of the light guide.

14. Device according to any one of the claims 7 to 13, characterized in that the phase shifting means (28a) are constituted by three phase shifters thus forming three secondary reference beams interfering with the measurement beam in order to form three first interference signals (68,70,72).

15. Optical device according to claim 13, characterized in that the first, second, third and fourth mirrors are formed by an etched side of the light guide extending up to the substrate (4).

16. Optical device according to claim 10, characterized in that the first (22), second (36,66) and third (74) splitting means and/or the supplementary splitting means (76) are formed by an etched side of the light guide extending up to the substrate (44).

17. Optical device according to any one of the claims 1 to 16, characterized in that the length L of the measurement zone (32) is equal to approximately $\lambda/4x.dn_2$ max with $\lambda$ being the wavelength of the guided mode, $dn_2$max the maximum possible variations of the effective index of the guided mode in the measurement zone and x the number of passages of the measurement beam (24) in the measurement zone.

FIG. 1

FIG. 8

FIG. 2

EP 0 367 675 B1

FIG. 3

FIG. 5

FIG. 4

17

FIG. 6

EP 0 367 675 B1

FIG. 7